# EUROPEAN PATENT SPECIFICATION

(11) **EP 2 762 398 B1**
(45) Date of publication and mention of the grant of the patent: **02.09.2015**
(21) Application number: 14425010.7
(22) Date of filing: 30.01.2014
(51) Int. Cl.: B62M 11/02, B62M 11/16, B62M 11/10

(54) **Race bicycle equipped with a speed multiplier**
Rennrad mit Geschwindigkeitsmultiplizierer
Bicyclette de course équipée d'un multiplicateur de vitesse

(30) Priority: 04.02.2013 IT RM20130067
(43) Date of publication of application: 06.08.2014
(73) Proprietor: Micheli, Alfonso, 00061 Anguillara Sabazia (IT)
(72) Inventor: Micheli, Alfonso, 00061 Anguillara Sabazia (IT)
(74) Representative: Cioncoloni, Giuliana

(56) References cited:
- CH-A5- 638 146
- DE-A1- 4 129 082
- GB-A- 303 327
- GB-A- 2 349 125

## Description

The present invention relates to a race bicycle equipped with a speed multiplier. The speed multiplier according to the invention employs, in particular, an epicycloidal gear.

A city bicycle equipped with a constant speed variator, which employs an epicycloidal gear concentrically mounted to the hub of the bicycle driven wheel adapted to receive the torque applied on the bicycle pedal cranks by a chain, is described in a patent application of the same Applicant. Concentrically mounted to the hub of the driven wheel is a differential gear having a first shaft rigidly connected to a first planet wheel of the differential gear and a second shaft rigidly connected to a second planet wheel of the differential gear, the first and second planet wheels protruding from a casing of the differential gear and engaging each other by a satellite whose small shaft is rigidly connected to the differential gear casing.

In other words, the movement is received by the chain from a wheel mounted on the first differential gear shaft rotatably mounted in turn on the hub of the driven wheel. A first planet wheel rigidly connected to the first differential gear shaft transmits the movement to the second planet wheel rigidly connected to the second differential gear shaft through the satellite. Document GB 303 327 discloses a bicycle equipped with a hub having a differential gear, having the features of the preamble of claim 1.

Now the Applicant refers to bicycles designed to sprinters on track or road runners and having a speed variator that allows generally the number of revolutions of the driven wheel to be increased with respect to the number of revolutions of the pedal drive shaft.

This is achieved by the invention in accordance with claim 1, whereby the first shaft of the differential gear mounted on the hub of the bicycle driven wheel is connected not to the first planet wheel of the differential gear, but to its satellite.

Further features and advantages of the present invention will become most clear by the indicative, and therefore non-limiting, description of its preferred embodiments, as illustrated in the accompanying drawing in which:
- Figure 1 is a general schematic plan view of a speed multiplier according to the present invention connected to a driven means consisting of the bicycle pedal cranks;
- Figure 2 is an enlarged schematic cross-section view of a first embodiment of the speed multiplier according to the present invention;
- Figure 3 is an enlarged schematic cross-section view of a second embodiment of the speed multiplier according to the present invention;
- Figure 4 is an enlarged schematic cross-section view of a third embodiment of the speed multiplier according to the present invention;
- Figures 5 and 6 are a schematic side view and a schematic cross-section view of the movement transmitting device in the speed multiplier in Figure 4, respectively; and
- Figure 7 is a schematic side view of a variant of the movement transmitting device in Figures 5 and 6.

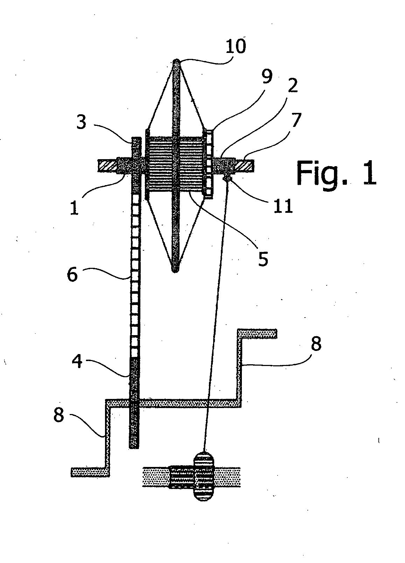

Referring to the general schematic plan view of the speed multiplier in Figure 1, therein indicated as 8 are a pair of pedal cranks mounted rigidly connected to a drive shaft (not denoted by reference numeral), as 4 a toothed wheel, and as 7 a hub of the driven wheel 10. Concentrically mounted on the hub 7 of the driven wheel 10 is a differential gear 5.

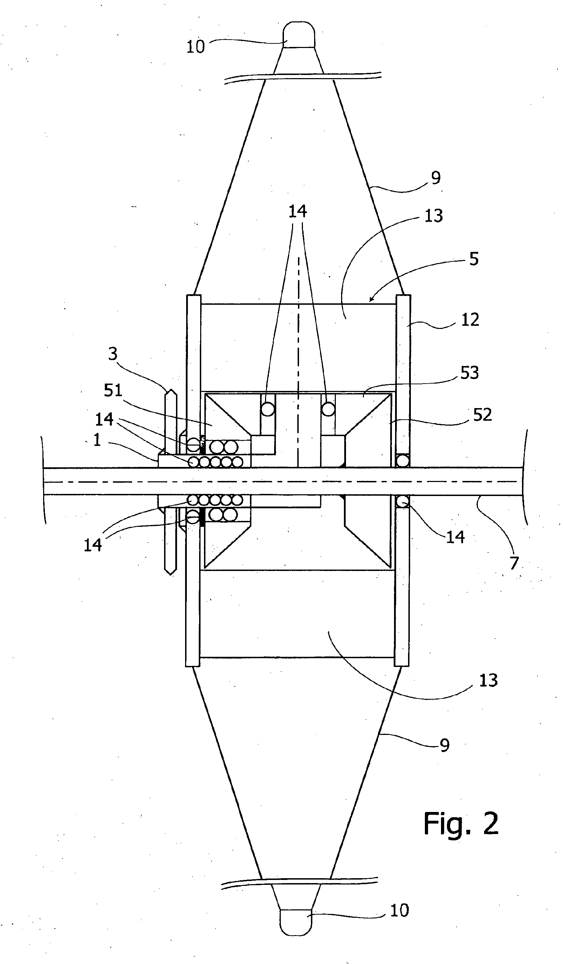

In particular, a sprocket 3 being connected by a flexible transmission 6, for example a chain, for the transmission of driving torque from the drive shaft of the pedal cranks 8 to the driven wheel 10, is mounted on an elbow-shaped shaft 1 of the differential gear 5. The elbow-shaped shaft 1 is freely rotatable on the hub 7 of the driven wheel 10. This is shown in Figure 2, which is an enlarged schematic cross-section view of a first embodiment of the speed multiplier according to the present invention. The sprocket 3 is either free wheel mounted or rigidly connected to the elbow-shaped shaft 1. A first planet wheel 51 in the differential gear 5 is freely rotatably mounted on the elbow-shaped shaft 1. The elbow-shaped shaft 1 of the differential gear has a 90 degrees bent portion inside the casing of the differential gear 5 that is closed by parallel walls 12, 12 and a cylindrical body 13 for spokes. Mounted on the casing of the differential gear 5 or on the walls 12 are spokes 9 of the driven wheel 10. Freely rotatable mounted on the 90 degrees bent portion of the elbow-shaped shaft 1 is a satellite 53 of the differential gear 5. Bearings are shown schematically with balls and denoted as 14.

The satellite 53 meshes with a second planet wheel 52 that, in a first embodiment of the present invention shown in the cross-section view of Figure 2, is welded on the hub 7 of the driven wheel 10. In this condition, for each revolution of the first shaft 1 of the differential gear, that is, for each complete rotation of the satellite 53 around the axis of the hub 7 of the driven wheel 10 of the bicycle, the first planet wheel 51 makes two revolutions, since the planet wheel 2 is stopped, as welded to the hub 7. If the wall 12 (to the left in the drawing) of the differential housing 5 is rigidly connected with the planet wheel 51, then the number of revolutions of the casing, and then the spokes rigidly connected therewith, is double than that one transmitted from the drive shaft through the freewheel sprocket 3. This feature is advantageous for the race track, where the sprinters must always go at maximum possible speed. If the toothed wheel 4 and the freewheel sprocket 3 have the same number of teeth, the bicycle wheel makes a number of revolutions twice the drive shaft.

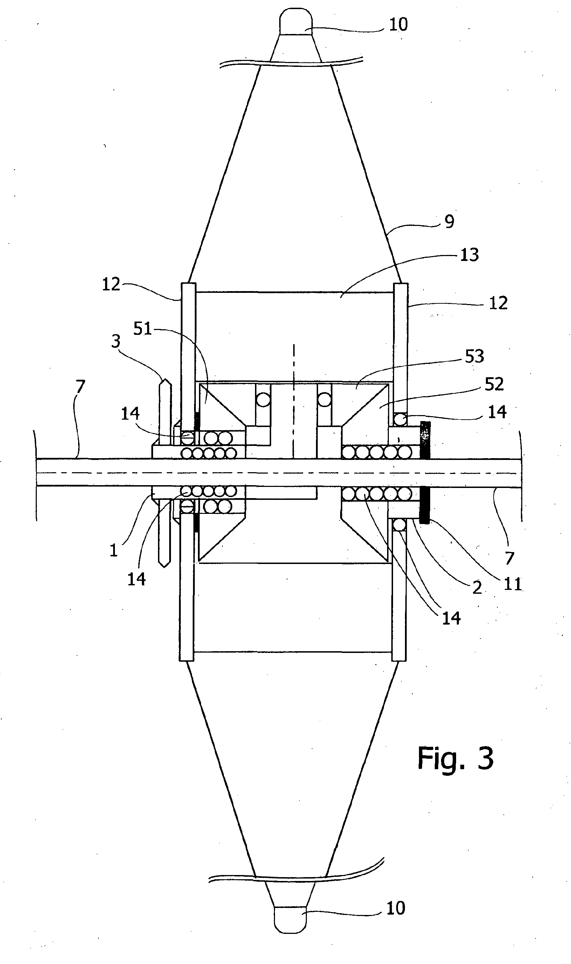

As mentioned above, this maximum speed is obtained by blocking the second planet wheel 52 with respect to the satellite 53 which receives the movement from the drive shaft of the pedal cranks 8. Alternatively to this condition of maximum continuous speed, the sprinter on the road may be interested in graduating the effect of multiplication of the number of revolutions depending on the situations. This can be achieved with a multiplier according to a second embodiment shown in Figure 3. The same or similar parts are indicated in Figure 3 with the same reference numeral. In this second embodiment, the planet wheel 52 is rotatably mounted with its shaft 2 on the hub 7 of the driven wheel 10, and the wall 12 of the housing of the differential gear rests by bearings 14, or a freewheel, on the shaft 2 of the planet wheel 52, rather than on the hub 7 of the driven wheel 10, as in the first embodiment.

Mounted on the shaft 2 is a brake 11 operated in any way by the sprinter on the road. In case of full operation of the brake 11, the same condition of the first embodiment occurs in which the number of revolutions of the driven wheel 10 with respect to that of the drive shaft of the pedal cranks 8 is doubled, the number of teeth of the toothed wheel 4 of the drive shaft being the same of the sprocket free-wheel 3. In absence of a braking operation by the brake 11, the movement caused by pedal cranks 8 to the drive shaft is transmitted to the freewheel sprocket 3 and from this to the satellite 53 of the differential gear, and then to the first planet wheel 51 and to the second planet wheel 52 of the differential gear 5. Freewheel mounted on the first planet wheel 51 of the differential gear 5 is the wall 12 of the housing of the differential gear 5, in which the movement of the toothed wheel 4 of the pedal cranks is transmitted with the same direction of rotation and with the maximum ratio determined by the number of teeth of the toothed wheel 4 of pedal cranks and of the freewheel sprocket 3.

In case of a braking intermediate between the complete braking condition and the absence of braking, the effect of multiplication of the number of revolutions can be selected to the extent desired. In this way, by varying the braking action on the second shaft 2 of the differential gear, the sprinter can change speed of the driven wheel and torque applied by him/her to the pedal cranks, with a result of advancing in the preferred way.

For a matter of symmetry in the entrainment of the differential housing, and then of the spokes, it would be important that both shafts 1 and 2 of the differential gear cooperate in said entrainment.

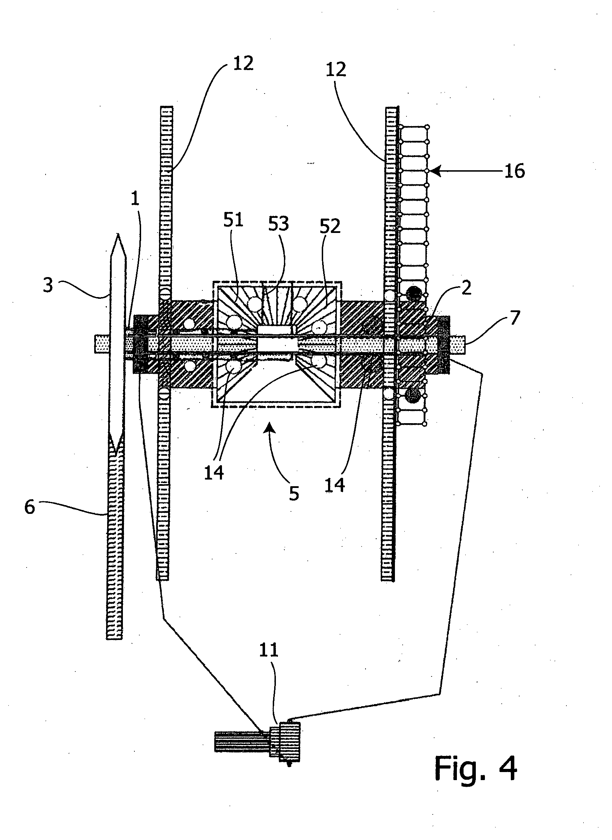

In this regard reference is made to Figure 4 which is an enlarged schematic cross-section view of a third embodiment of the speed multiplier according to the present invention. If the same reference numerals are used for similar parts in the previous figures, as in the second embodiment of the present invention, a freewheel sprocket 3, being connected by a flexible transmission 6, for example a chain, is mounted on an elbow-shaped shaft 1 of the differential gear 5 freely rotatable on the hub 7 of the driven wheel. A first planet wheel 51 of the differential gear 5 is freely rotatably mounted on the elbow-shaped shaft 1. A T-shaped shaft can be used in place of the elbow-shaped shaft in order to better stiffen the components of the differential gear. The elbow-shaped shaft 1 of the differential gear 5 has a 90 degrees bent portion inside of the differential gear housing closed by the parallel walls 12, 12. Mounted freely rotatable on the 90 degrees bent portion is a satellite 53 of the differential gear 5. Free wheel or bearings are shown schematically with balls and indicated as 14. The satellite 53 is in engagement with a second planet wheel 52 which is rotatably mounted by means of bearings 14 with its shaft 2 on the hub 7 of the driven wheel. The wall 12 of the differential housing acting as spokes rests by bearing 14 on the shaft 2 of the planet wheel 52, and with freewheel on the shaft 1 of the planet wheel 51. Moreover, freewheel mounted on the shaft 2 of the differential gear 5 is a sun wheel 15 of an epicycloidal gear 16 which has the purpose of transmitting the movement of the second shaft 2 of the differential gear.

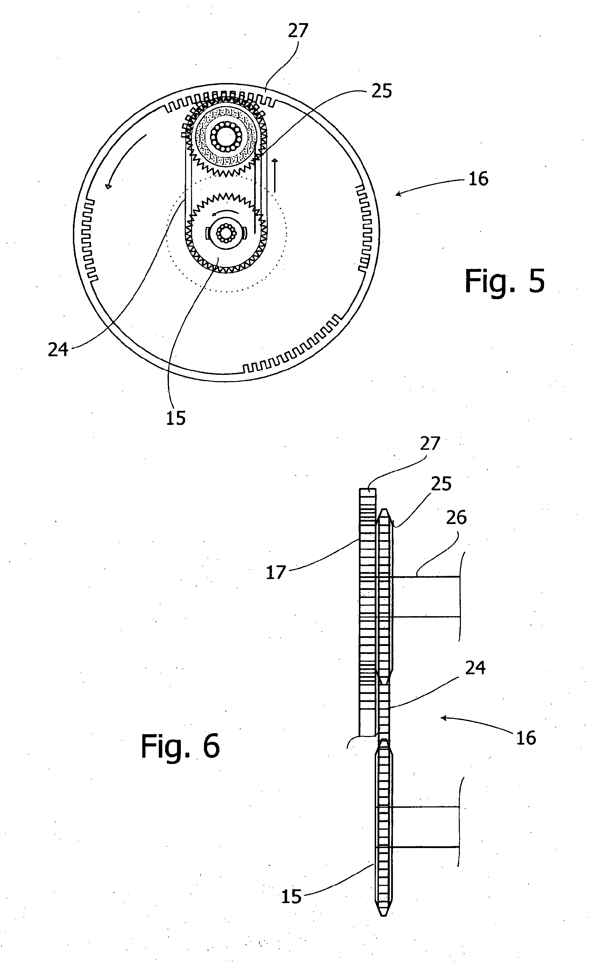

A device for transmitting the movement in the speed multiplier in Figure 4, in the form of an epicycloidal gear 16 is represented in Figures 5 and 6, in a side view and in partial cross-section view, respectively. In these figures the movement, which comes to the sun wheel 15, is transmitted via a flexible transmission 24 to a pulley 25 rotatably mounted on a fixed shaft 26 that is rigidly connected with the frame of the bicycle. The pulley 25 is rigidly connected with a toothed wheel 17 meshing with an internally toothed wheel 27. Alternatively, the sun wheel 15 can be stationary and the toothed wheel 17 is freewheel mounted rotatable on the shaft 26 of the pulley 25.

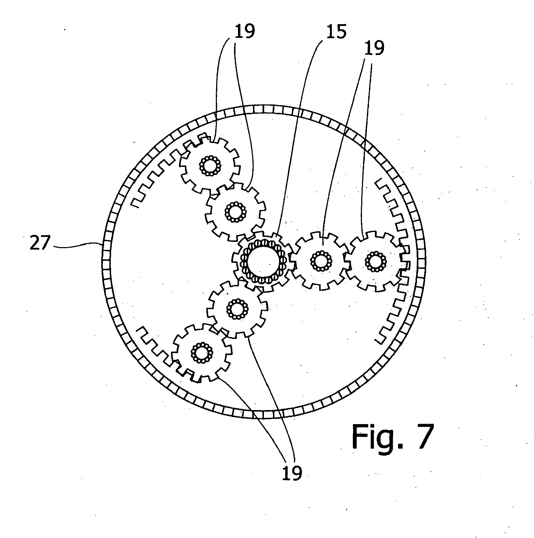

Obsviously, into the epicycloidal gear, in place of the flexible transmission 24, a gear transmission can be used as shown in Figure 7, which is a schematic side view of a variant of the device for transmitting the movement. Reference numerals like in Figures 5 and 6 are used with the addition of series of gears 19 which replace the flexible transmission 24 shown in the same figures 5 and 6.

Thanks to the epicycloidal gear 16, the movement being received by the first shaft 1 of the differential gear is transmitted to the second shaft 2 of the differential gear, and from this, through the freewheel sun wheel 15 to the same spokes by means of the common shaft 26 between spokes and toothed wheel 17. Mounted on the second differential gear shaft 2 is a brake 11 whose action is transmitted to the spokes in one side, like in the other side the analogous brake 11 positioned on the first differential shaft 1. The movement of the satellite 53 is transmitted to the first shaft of the planet wheel 51 of the differential when the brake 11 on the shaft of the planet wheel 52 is operated, as well as the movement of the satellite 53 is transmitted to the second shaft 2 of the planet wheel 52 when the brake 11 on the shaft of the planet wheel 11 is operated. The braking action performed by the brake 11 must be as much as possible synchronous so that it does not influence at the same time also the left side (in Figure 4) of the spokes, in which the first shaft is connected by a freewheel.

In the device as described above, in the case of complete operation of the brake 11, the condition of the first embodiment occurs.

In absence of a braking action by the brake 11, the movement from the shaft of the pedal cranks 8 to the rigidly connected sprocket or free wheel sprocket 3 is transmitted to the differential gear satellite 53, and from this to the first planet wheel 51 and to second planet wheel 52 of the differential gear 5. Mounted on the shaft of the first planet wheel 51 of the differential gear 5 is the wall 12 of the differential gear housing, in which the movement of the toothed wheel 4 of the pedal cranks is transmitted with the same direction of rotation and with the maximum ratio determined by the number of teeth of the toothed wheel 4 of the pedal cranks and of the sprocket 3.

In case of intermediate braking action, as described above, between the complete braking action of the shaft 1 of the planet wheel 51 with the simultaneous absence of braking action of the shaft of the planet wheel 52 and the complete braking of the planet wheel shaft 52 with the simultaneous absence of braking on the shaft 51, the effect of multiplication of the number of revolutions can be selected to the extent desired. In this way, by varying the braking action on the second shaft of the differential gear, the sprinter can change the speed of the driven wheel and the torque applied by him/her to the pedal cranks, with a result of advancing as preferred.

## Claims

1. A race bicycle equipped with a speed multiplier comprising a drive shaft driven by pedal cranks (8) and a hub (7) of a driven wheel (10), said driven wheel (10) receives the torque applied
on the pedal cranks (8) by torque transmission means, said means including a flexible transmission (6) running between a toothed wheel (4) of said pedal cranks (8) and a sprocket (3) mounted concentrically to the hub (7) of said driven wheel (10);
a differential gear (5) is mounted concentrically onto said hub (7) of the driven wheel (10)), said differential gear (5) having a casing supporting the spokes of the driven wheel (10), said bicycle **characterized in that** a first differential gear shaft (1) protrudes from said casing and supports said sprocket (3), two planet wheels (51, 52) and at least one satellite (53), said first differential gear shaft (1), which supports the planet wheel (51), being rotatable mounted on the hub (7) of the driven wheel (10) and terminating in a elbow supporting freely rotatable the satellite (53) of the differential which transmits the movement to the two planet wheels (51, 52).

2. A race bicycle according to claim 1, **characterised in that** the sprocket (3) is rigidly connected to the first differential gear shaft (1).

3. A race bicycle according to claim 1, **characterised in that** the sprocket (3) is mounted by a freewheel on the first differential gear shaft (1).

4. A race bicycle according to claim 1, **characterised in that** the second planet wheel (52) of the differential gear is welded on the hub (7) of the driven wheel (10) of the bicycle.

5. A race bicycle according to claim 1, **characterised in that** the second planet wheel (52) of the differential gear is rigidly connected to a second differential gear shaft (2) being freely rotatable mounted on the hub (7) of the driven wheel (10) of the bicycle.

6. A race bicycle according to claim 5, **characterised in that** mounted on the second differential gear shaft (2) is a braking device (11)

7. A race bicycle according to claim 5, **characterised in that** mounted by a freewheel on the second differential gear shaft (2) is a sun wheel (15) of an epicycloidal gear (16), a braking device (11) being provided on the first and second differential gear shafts (1, 2) connected through a synchronising device.

8. A race bicycle according to claim 7, **characterised in that** the sun wheel (15) meshes through a flexible transmission (24) with the teeth of a pulley (25) rotatable about a shaft (26) that is fixed to the bicycle, the pulley (25) being part of the epicycloidal gear (16) having an internally toothed wheel (27) receiving the movement of the pulley (25) through a toothed wheel (17) rigidly connected to the pulley (25), the internally toothed wheel (27) being rigidly connected to the differential gear casing supporting the spokes of the driven wheel (10) of the bicycle.

9. A race bicycle according to claim 7, **characterised in that** the sun wheel (15) meshes with an internally toothed wheel (27) receiving the movement of the solar wheel (15) through a series of toothed wheels (19), the internally toothed wheel (27) being rigidly connected to the differential gear casing supporting the spokes of the driven wheel (10) of the bicycle.

10. A race bicycle according to claim 7, **characterised in that** the sun wheel (15) is fixed, and a toothed wheel (17) is freewheel mounted about a shaft (26) fixed to the bicycle and supporting a pulley (25) in an epicycloidal gear having an internally toothed wheel (27) that receives the movement of the sun wheel (15).

## Patentansprüche

1. Ein Rennrad, ausgerüstet mit einem Geschwindigkeitsmultiplizierer, der eine mit Tretkurbeln (8) angetriebene Antriebswelle und eine Nabe (7) eines angetriebenen Rades (10) aufweist, besagtes angetriebenes Rad (10) erhält ein auf die Tretkurbeln (8) durch Drehmomentübertragungsmittel aufgebrachtes Drehmoment, das besagte Mittel umfasst eine biegsame Welle (6), die zwischen einem Zahnrad (4) der besagten Tretkurbeln (8) und einem Ritzel (3) läuft, das konzentrisch zu der Nabe (7) des besagten angetriebenen Rades (10) montiert ist;
ein Differenzialgetriebe (5) ist konzentrisch zu der Nabe (7) des besagten angetriebenen Rades (10) montiert, das besagte Differenzialgetriebe (5) weist ein Gehäuse auf, das die Speichen des angetriebenen Rades (10) des Fahrrades trägt, das besagte Fahrrad ist **dadurch gekennzeichnet, dass** eine erste Differenzialwelle (1) aus dem besagten Gehäuse herausragt und das besagte Ritzel (3), zwei Planetenräder (51, 52) und mindestens einen Satelliten (53) trägt, wobei die erste Differenzialwelle (1), die das Planetenrad (51) trägt, drehbar an der Nabe (7) des angetriebenen Rades (10) montiert ist und in einem Kniestück endet, das frei drehbar den Satelliten (53) des Differentials trägt, welches die Bewegung auf die beiden Planetenräder (51, 52) überträgt.

2. Ein Rennrad nach Anspruch 1, **dadurch gekennzeichnet, dass** das Ritzel (3) starr mit der ersten Differenzialwelle (1) verbunden ist

3. Ein Rennrad nach Anspruch 1, **dadurch gekennzeichnet, dass** das Ritzel (3) durch einen Freilauf an der ersten Differenzialwelle (1) montiert ist.

4. Ein Rennrad nach Anspruch 1, **dadurch gekennzeichnet, dass** das zweite Planetenrad (52) des Differenzialgetriebes an der Nabe (7) des angetriebenen Rades (10) des Fahrrades angeschweißt ist.

5. Ein Rennrad nach Anspruch 1, **dadurch gekennzeichnet, dass** das zweite Planetenrad (52) des Differenzialgetriebes starr mit der zweiten Differenzialwelle (2) verbunden ist, die frei drehbar an der Nabe (7) des angetriebenen Rades (10) des Fahrrades montiert ist.

6. Ein Rennrad nach Anspruch 5, **dadurch gekennzeichnet, dass** an der zweiten Differenzialwelle (2) eine Bremsvorrichtung (11) montiert ist.

7. Ein Rennrad nach Anspruch 5, **dadurch gekennzeichnet, dass** durch einen Freilauf an der zweiten Differenzialwelle (2) ein Sonnenrad (15) eines Planetengetriebes (16) montiert ist, eine Bremsvorrichtung (11) ist an der ersten und zweiten Differenzialwelle (1, 2) vorgesehenen, die durch eine Synchronisiervorrichtung verbunden sind.

8. Ein Rennrad nach Anspruch 7, **dadurch gekennzeichnet, dass** das Sonnenrad (15) durch eine biegsame Welle (24) in die Zähne einer Scheibe (25) eingreift, die durch eine Welle (26) drehbar ist, die am Fahrrad befestigt ist, die Scheibe (25) Teil des Planetengetriebes (16) ist, das ein innenverzahntes Rad (27) aufweist, welches die Bewegung der Scheibe (25) durch ein Zahnrad (17) erhält, das starr mit der Scheibe (25) verbunden ist, das innenverzahnte Rad (27) ist starr mit dem Differenzialgetriebegehäuse verbunden, das die Speichen des angetriebenen Rades (10) des Fahrrades trägt.

9. Ein Rennrad nach Anspruch 7, **dadurch gekennzeichnet, dass** das Sonnenrad (15) in ein innenverzahntes Rad (27) eingreift, das die Bewegung des Sonnenrades (15) durch eine Reihe von Zahnrädern (19) erhält, das innenverzahnte Rad (27) ist starr mit dem Differenzialgetriebegehäuse verbunden, das die Speichen des angetriebenen Rades (10) des Fahrrades trägt.

10. Ein Rennrad nach Anspruch 7, **dadurch gekennzeichnet, dass** das Sonnenrad (15) fest angebracht ist und ein Zahnrad (17) als Freilauf um eine Welle (26) montiert ist, die fest am Fahrrad angebracht ist und eine Riemenscheibe (25) in einem Planetengetriebe trägt, das ein innenverzahntes Rad (27) aufweist, das die Bewegung von dem Sonnenrad (15) erhält.

## Revendications

1. Vélo de course équipé d'un multiplicateur de vitesse comprenant un axe d'entraînement entraîné par des manivelles de pédalier (8) et un moyeu (7) d'une roue menée (10), ladite roue menée (10) reçoit le couple appliqué sur les manivelles de pédalier (8) par un moyen de transmission de couple, ledit moyen comprenant une transmission flexible (6) courant entre une roue dentée (4) desdites manivelles de pédalier (8) et un pignon (3) monté de manière concentrique sur le moyeu (7) de ladite roue menée (10) ;
un engrenage différentiel (5) est monté de manière concentrique sur ledit moyeu (7) de la roue menée (10), ledit engrenage différentiel (5) comportant un carter supportant les rayons de la roue menée (10), ledit vélo étant **caractérisé en ce qu'**un premier axe d'engrenage différentiel (1) est en saillie depuis ledit carter et supporte ledit pignon (3), deux roues planétaires (51, 52) et au moins un satellite (53),
ledit premier axe d'engrenage différentiel (1), qui supporte la roue planétaire (51), étant monté de manière rotative sur le moyeu (7) de la roue menée (10) et se terminant par un coude supportant de manière rotative libre le satellite (53) du différentiel qui transmet le mouvement aux deux roues planétaires (51, 52).

2. Vélo de course selon la revendication 1, **caractérisé en ce que** le pignon (3) est raccordé de façon rigide au premier axe d'engrenage différentiel (1).

3. Vélo de course selon la revendication 1, **caractérisé en ce que** le pignon (3) est monté avec une roue libre sur le premier axe d'engrenage différentiel (1).

4. Vélo de course selon la revendication 1, **caractérisé en ce que** le second satellite (52) de l'engrenage différentiel est soudé sur le moyeu (7) de la roue menée (10) du vélo.

5. Vélo de course selon la revendication 1, **caractérisé en ce que** le second satellite (52) de l'engrenage différentiel est raccordé de façon rigide à un second axe d'engrenage différentiel (2) librement rotatif monté sur le moyeu (7) de la roue menée (10) du vélo.

6. Vélo de course selon la revendication 5, **caractérisé en ce qu'**un dispositif de freinage (11) est monté sur le second axe d'engrenage différentiel (2).

7. Vélo de course selon la revendication 5, **caractérisé en ce qu'**un planétaire (15) d'un engrenage épicycloïdal (16) est monté avec une roue libre sur le second axe d'engrenage différentiel, un dispositif de freinage (11) étant disposé sur le premier et le second axes d'engrenage différentiel (1, 2) raccordés par l'intermédiaire d'un dispositif de synchronisation.

8. Vélo de course selon la revendication 7, **caractérisé en ce que** le planétaire (15) s'engrène par l'intermédiaire d'une transmission flexible (24) avec les dents d'une poulie (25) rotative autour d'un axe (26) fixé sur le vélo, la poulie (25) faisant partie de l'engrenage épicycloïdal (16) comportant une roue (27) dentée à l'intérieur qui reçoit le mouvement de la poulie (25) par l'intermédiaire d'une roue dentée (17) raccordée de façon rigide à la poulie (25), la roue dentée à l'intérieur (27) étant raccordée de façon rigide au carter de l'engrenage différentiel supportant les rayons de la roue menée (10) du vélo.

9. Vélo de course selon la revendication 7, **caractérisé en ce que** le planétaire (15) s'engrène avec une roue dentée à l'intérieur (27) qui reçoit le mouvement du planétaire (15) par l'intermédiaire d'une série de roues dentées (19), la roue dentée à l'intérieur (27) étant raccordée de façon rigide au carter de l'engrenage différentiel supportant les rayons de la roue menée (10) du vélo.

10. Vélo de course selon la revendication 7, **caractérisé en ce que** le planétaire (15) est fixé, et une roue dentée (17) est montée en roue libre autour d'un axe (26) fixé au vélo et supportant une poulie (25) dans un engrenage épicycloïdal comportant une roue dentée à l'intérieur (27) qui reçoit le mouvement du planétaire (15).
